# EUROPÄISCHE PATENTANMELDUNG

(11) **EP 1 757 475 A1**
(43) Veröffentlichungstag der Anmeldung: **28.02.2007**
(21) Anmeldenummer: 06015273.3
(22) Anmeldetag: 21.07.2006
(51) Int. Cl.: B60H 1/00

(54) **Verbindungsanordnung, insbesondere für CO2-Leitungen einer Kraftfahrzeug-Klimaanlage**

(30) Priorität: 22.08.2005 DE 102005039796
(71) Anmelder: Behr GmbH & Co. KG, 70469 Stuttgart (DE)
(72) Erfinder: Müller, Frank, Dipl.- Ing., 75397 Simmozheim (DE)
(74) Vertreter: Nestler, Jan Hendrik

(57) **Zusammenfassung**

Die Erfindung betrifft eine Verbindungsanordnung (1), insbesondere für ein Kraftfahrzeug, mit mindestens einer in einem Gehäuse (5) angeordneten Verbindungsstelle (2) mindestens zweier Leitungen (3, 4), insbesondere mindestens zweier CO₂-Kältemittelleitungen, wobei in dem Gehäuse (5), das ansonsten dicht, insbesondere bevorzugt gasdicht, ist, eine Austrittsöffnung (9) vorgesehen ist, durch die ein aus der ggf. undichten Verbindungsstelle (2) ausströmendes Medium nach außen an die Umgebung abgeführt werden kann.

## Beschreibung

Die Erfindung betrifft eine Verbindungsanordnung, insbesondere für CO₂-Leitungen einer Kraftfahrzeug-Klimaanlage, gemäß dem Oberbegriff des Anspruches 1.

Für die Verbindung zweier Leitungen, insbesondere zweier Kältemittel-Leitungen einer mit CO₂ als Kältemittel betriebenen Kraftfahrzeug-Klimaanlage sind eine Vielzahl unterschiedlicher Verbindungen bekannt, wie beispielsweise Flanschverbindungen, verlötete Steckverbindungen. Bei derartigen Verbindungen tritt jedoch das Problem auf, dass die Verbindungen im Laufe der Zeit undicht werden können und so das Kältemittel, bspw. CO₂, austreten kann. Dies ist insbesondere dann unerwünscht, wenn die Verbindung im Fahrzeug-Innenraum angeordnet ist und somit dort für die Insassen gefährlich hohe CO₂-Konzentrationen auftreten können.

Bekannt aus anderen Bereichen, insbesondere für giftige Medien, sind Systeme, die eine zusätzliche Abkapselung der Verbindungsstelle vorsehen. Dabei ist für jede der Leitungen, die an der Verbindungsstelle miteinander verbunden sind, eine abgedichtete Durchführung in der Abkapselung vorhanden. Die Abkapselung ist dicht ausgebildet und kann auch Sensoren aufweisen, die eine Leckage erkennen und melden.

Es ist Aufgabe der Erfindung, eine verbesserte Verbindungsanordnung zur Verfügung zu stellen. Diese Aufgabe wird gelöst durch eine Verbindungsanordnung mit den Merkmalen des Anspruchs 1. Vorteilhafte Ausgestaltungen sind Gegenstand der Unteransprüche.

Erfindungsgemäß ist eine Verbindungsanordnung, insbesondere für ein Kraftfahrzeug, mit mindestens einer in einem Gehäuse angeordneten Verbindungsstelle mindestens zweier Leitungen vorgesehen, in denen ein für die Umwelt in den im Leckagefall möglichweise austretenden Mengen und Konzentrationen nicht schädliches, insbesondere nicht giftiges Medium, vorzugsweise das Kältemittel R744 (CO₂), enthalten ist, wobei in dem Gehäuse, das ansonsten dicht, vorzugsweise gasdicht, ist, neben den abgedichteten Öffnungen für die Durchführung der Leitungen zur Verbindungsstelle eine offene Austrittsöffnung vorgesehen ist, durch die das aus der ggf. undichten Verbindungsstelle ausströmendes Medium nach außen, insbesondere an die Umgebung, vorzugsweise über ein sich automatisch einstellendes Druckgefälle, abgeführt werden kann, wodurch bei einer Anordnung der Verbindungsstelle im Fahrzeuginnenraum ein Austreten des Mediums in den Fahrzeuginnenraum sicher und auf einfache Weise vermieden werden kann. Da das Medium, zumindest im Falle von CO₂, in den gegebenenfalls austretenden Mengen nicht schädlich für die Umwelt ist, kann es direkt nach außen an die Umgebung abgeführt werden, d.h. es sind keine Speicher o.ä. erforderlich.

Das Gehäuse wird vorzugsweise durch ein gasdichtes, bevorzugt spritzgegossenes Kunststoffgehäuse gebildet, in welchem die Austrittsöffnung vorgesehen ist. Die Herstellung eines derartigen Gehäuses, insbesondere wenn es aus zwei Teilen, vorzugsweise aus zwei Hälften, besteht, ist einfach. Wird ein 2-Komponenten-Spritzgießverfahren verwendet, so können ggf. auch die Dichtungen gegenüber den Leitungen und der anderen Gehäusehälfte direkt aus einem weicheren Material angespritzt werden.

Die beiden Teile des Gehäuses werden bevorzugt mittels mindestens einer Clipsverbindung und/oder mittels mindestens einer Schraubverbindung verbunden, jedoch sind auch andere Verbindungen möglich, die eine ausreichende Sicherheit vor einem unerwünschten Öffnen des Gehäuses aufweisen. Die Gehäuseteile sind vorzugsweise lösbar miteinander verbunden, so dass die Verbindungsstelle bei Bedarf überprüft werden kann.

Das Gehäuse ist vorzugsweise parallel zu der Längsachse der miteinander verbundenen Leitungen geteilt, wodurch eine relativ einfache Montage möglich ist.

Bevorzugt ist genau eine Austrittsöffnung im Gehäuse vorgesehen, insbesondere bevorzugt im unteren Bereich desselben. Die Austrittsöffnung führt bevorzugt direkt nach außen oder an der Austrittsöffnung ist eine Leitung angeschlossen, die nach außen führt, wobei die Leitung möglichst kurz gehalten ist, um einen geringen Strömungswiderstand zu erzeugen, so dass bei einem plötzlichen Austritt des Mediums dasselbe schnell abgeführt werden kann.

Das Abführen des ggf. austretenden Mediums erfolgt bevorzugt durch den Fahrzeugboden nach außen.

Dabei ist bevorzugt die Austrittsöffnung oder das Ende der Leitung, die an der Austrittsöffnung angebracht ist, derart angeordnet, dass bei Fahrt ein leichter Unterdruck im Innenraum des Gehäuses erzeugt wird, so dass ggf. ausströmendes Medium bei Fahrt automatisch nach außen abgesaugt wird.

Bevorzugt wird eine derartige Verbindungsanordnung für eine zusätzliche Sicherung der Verbindungsstelle zweier Leitungen einer CO₂-betriebenen Kraftfahrzeug-Klimaanlage verwendet, wobei die Verbindungsstelle im Fahrzeug-Innenraum angeordnet ist, bspw. im Bodenbereich unter einem Teppich.

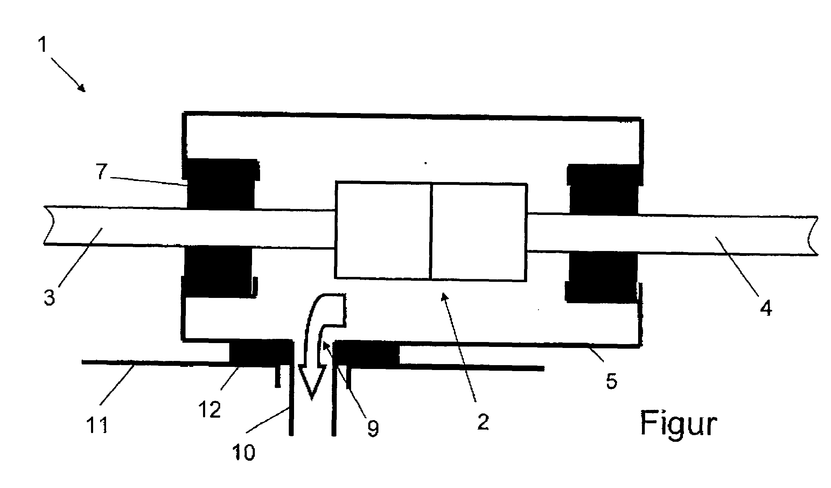

Im Folgenden wird eine Verbindungsanordnung anhand eines Ausführungsbeispiels unter Bezugnahme auf die Zeichnung im Einzelnen erläutert. Die einzige Figur der Zeichnung zeigt eine schematische Darstellung einer erfindungsgemäßen Verbindungsanordnung, die im Folgenden in ihrer Gesamtheit durch das Bezugszeichen 1 bezeichnet ist.

Die Verbindungsanordnung 1 weist vorliegend eine Verbindungsstelle 2 zweier CO₂-Leitungen 3 und 4, und ein zweiteiliges Gehäuse 5 mit Dichtelementen 7 auf. Bei der Verbindungsstelle 2 handelt es sich vorliegend um eine gelötete Verbindung der beiden Leitungen 3 und 4, es kann sich jedoch auch um eine andere geeignete Verbindung der Leitungen 3 und 4 handeln. Das Gehäuse 5 ist parallel zu den Leitungen 3 und 4 in einer Ebene in zwei etwa gleich große Hälften geteilt. Die Gehäusehälften sind mittels Clipsverbindungen lösbar miteinander verbunden.

Die Leitungen 3 und 4 sind mit Hilfe der Dichtelemente 7 gegenüber dem Gehäuse 5 an der Ein- und Austrittsstelle desselben abgedichtet. Ferner sind die das Gehäuse 5 bildenden Gehäusehälften gegeneinander mit Hilfe von weiteren Dichtelementen (nicht dargestellt) abgedichtet, wobei einzelne der Dichtelemente auch miteinander verbunden, d.h. einteilig, ausgebildet sein können. Bei den Dichtelementen handelt es sich vorliegend um elastisch ausgebildete Elemente, die ein Austreten von Gas bis zu einem gewissen Überdruck im Gehäuseinneren gegenüber der Umgebung im Wesentlichen verhindern können. Durch das Vorsehen der Dichtelemente ist das Gehäuse 5 somit vorliegend im Prinzip gasdicht ausgebildet, wobei beim vorgesehenen Anwendungsfall auch eine annähernde Gasdichtheit zumindest bei geringen Druckdifferenzen ausreicht.

Im Gehäuse 5, vorliegend in der unteren Gehäusehälfte, ist genau eine Austrittsöffnung 9 vorgesehen, durch welche ggf. aus einer undichten Verbindungsstelle 2 austretendes Gas, wie durch einen Pfeil angedeutet, nach außen abgeführt werden kann. Hierfür ist die Austrittsöffnung 9 mit einer einstückig mit der unteren Gehäusehälfte verbundenen Leitung 10 ausgebildet, die durch eine Bodenöffnung geführt ist, welche im Bodenblech 11 des Kraftfahrzeugs vorgesehen ist. Die Leitung 10 ist gegenüber dem Bodenblech 11 mit Hilfe einer weiteren Dichtung 12 abgedichtet, so dass ein unerwünschtes Rückströmen von am Ende der Leitung 10 austretenden Gases oder von Umgebungsluft in den Fahrzeug-Innenraum oder ein Austreten von Luft aus dem Fahrzeug-Innenraum vermieden werden kann. Die Leitung 10 ist vorliegend möglichst kurz gehalten und endet kurz nach dem Bodenblech 11 in einem Bereich, von dem her keine Luft für den Fahrzeuginnenraum und/oder Motor angesaugt wird. Ferner ist die Ausströmöffnung der Leitung 10 derart ausgebildet, dass ein Austreten von Gas aus dem Gehäuse 5 nicht durch die ggf. an der Austrittsstelle herrschende Strömung behindert wird, sondern eher bei Fahrt eine leichte Sogwirkung erzeugt wird.

## Patentansprüche

1. Verbindungsanordnung, insbesondere für ein Kraftfahrzeug, mit mindestens einer in einem Gehäuse (5) angeordneten Verbindungsstelle (2) mindestens zweier Leitungen (3, 4), **dadurch gekennzeichnet, dass** in dem Gehäuse (5), das ansonsten dicht ist, mindestens eine offene Austrittsöffnung (9) vorgesehen ist, die in Verbindung mit der Umgebung ist.

2. Verbindungsanordnung nach Anspruch 1, **dadurch gekennzeichnet, dass** die Verbindungsstelle (2) die Verbindungsstelle mindestens zweier CO₂-Kältemittelleitungen ist.

3. Verbindungsanordnung nach Anspruch 1 oder 2, **dadurch gekennzeichnet, dass** das Gehäuse (9) durch ein gasdichtes Kunststoffgehäuse gebildet ist, in welchem die offene Austrittsöffnung (9) vorgesehen ist.

4. Verbindungsanordnung nach einem der vorhergehenden Ansprüche, **dadurch gekennzeichnet, dass** das Gehäuse durch ein zweiteiliges Gehäuse (5) gebildet ist.

5. Verbindungsanordnung nach Anspruch 4, **dadurch gekennzeichnet, dass** das zweiteilige Gehäuse (5) durch zwei Halbschalen gebildet ist.

6. Verbindungsanordnung nach Anspruch 4 oder 5, **dadurch gekennzeichnet, dass** die beiden Teile des Gehäuses (5) mittels mindestens einer Clipsverbindung und/oder mittels mindestens einer Schraubverbindung verbunden sind.

7. Verbindungsanordnung nach einem der Ansprüche 4 bis 6, **dadurch gekennzeichnet, dass** die beiden Teile des Gehäuses (5) lösbar miteinander verbunden sind.

8. Verbindungsanordnung nach einem der Ansprüche 4 bis 7, **dadurch gekennzeichnet, dass** das Gehäuse (5) parallel zu der Längsachse der miteinander verbundenen Leitungen (3, 4) geteilt ist.

9. Verbindungsanordnung nach einem der vorhergehenden Ansprüche, **dadurch gekennzeichnet, dass** das Gehäuse (5) derart ausgebildet ist, dass genau eine Austrittsöffnung (9) vorgesehen ist.

10. Verbindungsanordnung nach einem der vorhergehenden Ansprüche, **dadurch gekennzeichnet, dass** die Austrittsöffnung direkt nach außen führt oder eine Leitung (10) an der Austrittsöffnung (9) angeschlossen ist, die nach außen führt.

11. Verbindungsanordnung nach einem der vorhergehenden Ansprüche, **dadurch gekennzeichnet, dass** das Gehäuse (5) derart ausgebildet ist, dass die Austrittsöffnung (9) auf der Unterseite des Gehäuses (5) angeordnet ist.

12. Verbindungsanordnung nach einem der vorhergehenden Ansprüche, **dadurch gekennzeichnet, dass** die Austrittsöffnung oder Leitung (10) an der Austrittsöffnung (9) derart ausgebildet ist, dass sie durch den Fahrzeugboden (12) nach außen führt.

13. Verbindungsanordnung nach einem der vorhergehenden Ansprüche, **dadurch gekennzeichnet, dass** am Gehäuse (5) Dichtungen (7, 12) vorgesehen oder in das Gehäuse integriert ausgebildet sind.

14. Verbindungsanordnung nach einem der vorhergehenden Ansprüche, **dadurch gekennzeichnet, dass** die Austrittsöffnung oder das Ende der Leitung (10), die an der Austrittsöffnung (9) angebracht ist, derart angeordnet ist, dass bei Fahrt ein Unterdruck im Innenraum des Gehäuses (5) erzeugt wird.

15. Klimaanlage, insbesondere für ein Kraftfahrzeug, **gekennzeichnet durch** mindestens eine Verbindungsanordnung (1) gemäß einem der Ansprüche 1 bis 14.
